# EUROPEAN PATENT SPECIFICATION

(11) **EP 1 600 281 B1**
(45) Date of publication and mention of the grant of the patent: **08.10.2008**
(21) Application number: 05007528.2
(22) Date of filing: 06.04.2005
(51) Int. Cl.: B29C 67/00, B29C 35/08

(54) **Bi-directional feeding apparatus for laser sintering and method for feeding powder material**
Bidirektionelle Zuführeinrichtung für Lasersintern und Verfahren zur Zuführung von Pulver
Dispositif d'alimentation bi-directionnel pour le frittage par laser et méthode d'alimentation en poudre

(30) Priority: 28.05.2004 US 856289
(43) Date of publication of application: 30.11.2005
(73) Proprietor: 3D SYSTEMS, INC., Valencia CA 91355 (US)
(72) Inventor: Welch, IV, Robert H.W., Austin Texas 78749 (US); Chung, Tae Mark, Castaic California 91384 (US); Hanna, Christopher R., Austin Texas 78750 (US)
(74) Representative: Hess, Peter K. G.

(56) References cited:
- US-A- 5 647 931
- US-A- 5 786 562
- US-A- 5 876 550
- US-A- 5 908 569
- US-A1- 2001 050 448
- US-A1- 2003 201 255

## Description

### BACKGROUND OF THE INVENTION

This invention relates to the field of freeform fabrication, and more specifically is directed to the fabrication of three-dimensional objects by selective laser sintering according to the method of claim 1 and using the apparatus of claim 9.

The field of freeform fabrication of parts has, in recent years, made significant improvements in providing high strength, high density parts for use in the design and pilot production of many useful articles. Freeform fabrication generally refers to the manufacture of articles directly from computer-aided-design (CAD) databases in an automated fashion, rather than by conventional machining of prototype articles according to engineering drawings. As a result, the time required to produce prototype parts from engineering designs has been reduced from several weeks to a matter of a few hours.

By way of background, an example of a freeform fabrication technology is the selective laser sintering process practiced in systems available from 3D Systems, Inc., in which articles are produced from a laser-fusible powder in layerwise fashion. According to this process, a thin layer of powder is dispensed and then fused, melted, or sintered, by laser energy that is directed to those portions of the powder corresponding to a cross-section of the article. Conventional selective laser sintering systems, such as the Vanguard system available from 3D Systems, Inc., position the laser beam by way of galvanometer-driven mirrors that deflect the laser beam. The deflection of the laser beam is controlled, in combination with modulation of the laser itself, to direct laser energy to those locations of the fusible powder layer corresponding to the cross-section of the article to be formed in that layer. The computer based control system is programmed with information indicative of the desired boundaries of a plurality of cross sections of the part to be produced. The laser may be scanned across the powder in raster fashion, with modulation of the laser affected in combination therewith, or the laser may be directed in vector fashion. In some applications, cross-sections of articles are formed in a powder layer by fusing powder along the outline of the cross-section in vector fashion either before or after a raster scan that "fills" the area within the vector-drawn outline. In any case, after the selective fusing of powder in a given layer, an additional layer of powder is then dispensed, and the process repeated, with fused portions of later layers fusing to fused portions of previous layers as appropriate for the article, until the article is complete.

Detailed description of the selective laser sintering technology may be found in U.S. Patent Nos. 4,863,538; 5,132,143; and 4,944,817, all assigned to Board of Regents, The University of Texas System, and in U.S. Patent No. 4,247,508 to Housholder.

The selective laser sintering technology has enabled the direct manufacture of three-dimensional articles of high resolution and dimensional accuracy from a variety of materials including polystyrene, some nylons, other plastics, and composite materials such as polymer coated metals and ceramics. Polystyrene parts may be used in the generation of tooling by way of the well-known "lost wax" process. In addition, selective laser sintering may be used for the direct fabrication of molds from a CAD database representation of the object to be molded in the fabricated molds; in this case, computer operations will "invert" the CAD database representation of the object to be formed, to directly form the negative molds from the powder.

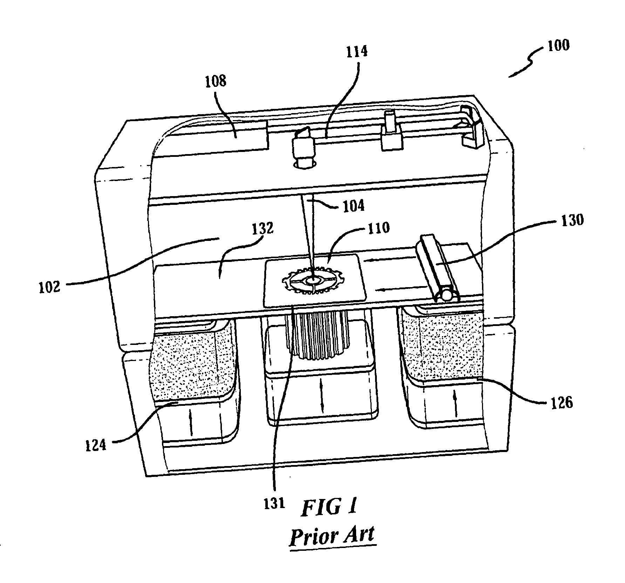

Figure 1 illustrates, by way of background, a rendering of a conventional selective laser sintering system currently sold by 3D Systems, Inc. of Valencia, California. Figure 1 is a rendering shown without doors for clarity. A carbon dioxide laser and its associated optics are shown mounted in a unit above a process chamber that includes a powder bed, two feed powder cartridges, and a leveling roller. The process chamber maintains the appropriate temperature and atmospheric composition for the fabrication of the article. The atmosphere is typically an inert atmosphere, such as nitrogen.

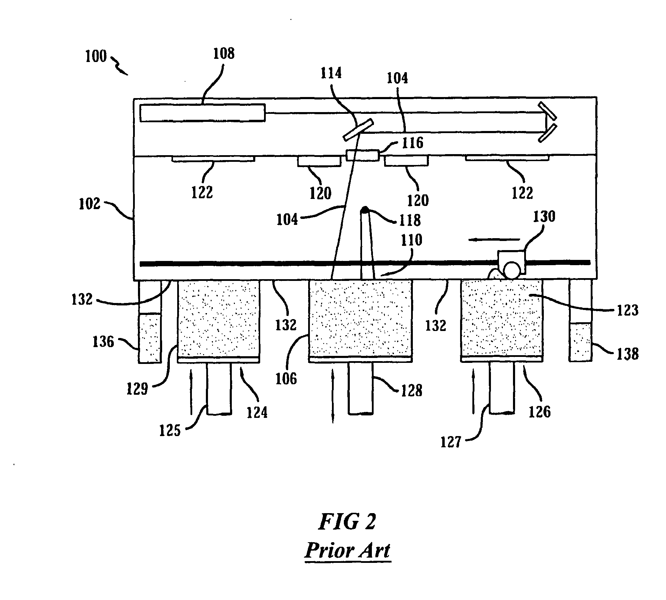

Operation of this conventional selective laser sintering system is shown in Figure 2 in a front view of the process with the doors removed for clarity. A laser beam **104** is generated by laser **108,** and aimed at target surface or area **110** by way of scanning system **114** that generally includes galvanometer-driven mirrors which deflect the laser beam. The laser and galvonometer systems are isolated from the hot chamber **102** by a laser window **116.** The laser window **116** is situated within radiant heater elements **120** that heat the target area **110** of the part bed below. These heater elements **120** may be ring shaped (rectangular or circular) panels or radiant heater rods that surround the laser window **116.** The deflection and focal length of the laser beam are controlled, in combination with the modulation of laser **108** itself, to direct laser energy to those locations of the fusible powder layer corresponding to the cross-section of the article to be formed in that layer. Scanning system **114** may scan the laser beam across the powder in a raster-scan fashion, or in vector fashion. It is understood that scanning entails the laser beam intersecting the powder surface in the target area **110.**

Two feed systems **(124,126)** feed powder into the system by means of push-up piston systems. A part bed **132** receives powder from the two feed pistons as described immediately hereafter. Feed system **126** first pushes up a measured amount of powder and a counter-rotating roller **130** picks up and spreads the powder over the part bed in a uniform manner. The counter-rotating roller **130** passes completely over the target area **110** and part bed **132.** Any residual powder is deposited into an overflow receptacle **136.** Positioned nearer the top of the chamber are radiant heater elements **122** that pre-heat the feed powder and a ring or rectangular shaped radiant heater element **120** for heating the part bed surface. Element **120** has a central opening which allows a laser beam to pass through the laser window **116.** After a traversal of the counter-rotating roller **130** across the part bed **132** the laser selectively fuses the layer just dispensed. The roller then returns from the area of the overflow receptacle **136,** after which the feed piston **124** pushes up a prescribed amount of powder and the roller **130** dispenses powder over the target area **110** in the opposite direction and proceeds to the other overflow receptacle **138** to deposit any residual powder. Before the roller **130** begins each traverse of the part bed **132** the center part bed piston **128** drops by the desired layer thickness to make room for additional powder.

The powder delivery system in system **100** includes feed pistons **125** and **127.** Feed pistons **125** and **127** are controlled by motors (not shown) to move upwardly and lift, when indexed, a volume of powder into chamber **102.** Part piston **128** is controlled by a motor (not shown) to move downwardly below the floor of chamber **102** by a small amount, for example 0.125 mm, to define the thickness of each layer of powder to be processed. Roller **130** is a counter-rotating roller that translates powder from feed systems **124** and **126** onto target surface **110.** When traveling in either direction the roller carries any residual powder not deposited on the target area into overflow receptacles **(136,138)** on either end of the process chamber **102.** Target surface **110,** for purposes of the description herein, refers to the top surface of heat-fusible powder (including portions previously sintered, if present) disposed above part piston **128;** the sintered and unsintered powder disposed on part piston **128** will be referred to herein as part cake **106.** System **100** of Figure 2 also requires radiant heaters **122** over the feed pistons to pre-heat the powders to minimize any thermal shock as fresh powder is spread over the recently sintered and hot target area **110.** This type of dual piston feed system, providing fresh powder from below the target area, with heating elements for both feed beds and the part bed is implemented commercially in the Vanguard^{™} selective laser sintering system sold by 3D Systems, Inc. of Valencia, California.

Another known powder delivery system uses overhead hoppers to feed powder from above and either side of target area **110** in front of a delivery apparatus such as a wiper or scraper.

US patent 5,647,931 discloses a method and an apparatus, according to the preamble of claim 9, for producing three-dimensional objects by layerwise solidification of a material. The teachings of this document are directed to the problem that, in particular when using powdery or pasty material, a material layer having an exactly adjusted thickness can not be generated in a sufficiently fast manner. In order to solve this problem, it is proposed to scrape the material by means of a vibrating wiper member when applying the material or to provide a movable container used for applying the material with such wiper members at the lower side thereof.

US patent 5,908,569 discloses an apparatus for producing a three-dimensional object by successive solidification of layers of a solidifiable material at places corresponding to the respective cross-section of the object by means of radiation. The apparatus comprises a support for supporting the object to be formed, a coating device for applying layers of the solidifiable material onto the support or a previously solidified layer, a solidifying device for solidifying the layers of the material at places corresponding to the respective cross-section of the object and a heating apparatus disposed above the support in operational position for heating the solidifiable material. The heating apparatus comprising at least one straight radiant heater with a varying heating power along its length.
There are advantages and disadvantages to each of these systems. Both require a number of mechanisms, either push-up pistons or overhead hopper systems with metering feeders to effectively deliver metered amounts of powder to each side of the target area and in front of the spreading mechanism which typically is either a roller or a wiper blade.

Although a design such as system **100** has proven to be very effective in delivering both powder and thermal energy in a precise and efficient way there is a need to do so in a more cost effective manner by reducing the number of mechanisms and improve the pre-heating of fresh powder to carry out the selective laser sintering process.

### BRIEF SUMMARY OF THE INVENTION

It is an aspect of the present invention to provide a method and apparatus for fabricating objects by selective laser sintering employing fewer mechanisms.

It is another aspect of the present invention to provide a method and apparatus for fabricating objects by selective laser sintering which deposits all of the powder from an overhead feed system that is needed to form two successive cross-sectional layers on one side of a target area and which concurrently levels the powder for the first successive layer while transporting the powder for the second successive layer to an opposing second side of the target area.

It is another aspect of the present invention that a method and apparatus for fabricating objects via selective laser sintering are provided without sacrificing good thermal control and good powder delivery.

It is another aspect of the present invention that a modified process and an apparatus that utilize only one overhead feed hopper and no feed pistons with radiant heaters are provided.

It is another aspect of the present invention that the second powder wave used to form the second layer of powder is preheated in a parked position within the process chamber while the laser beam scans the first layer of powder.

It is an advantage of the present invention that an apparatus and a method for employing that apparatus are provided for fabricating objects with a selective laser sintering system having a smaller machine footprint.

It is another advantage of the present invention that the method and apparatus are achieved at a lower cost than prior laser sintering systems.

The invention includes a method for forming a three dimensional article by laser sintering according to claim 1.

The invention also includes an apparatus for producing parts from a powder according to claim 9.

### BRIEF DESCRIPTION OF DRAWINGS

These and other aspects, features and advantages of the invention will become apparent upon consideration of the following detailed disclosure, especially when taken in conjunction with the accompanying drawings wherein:
Figure 1 is a diagrammatic illustration of a prior art selective laser sintering machine with portions cut away;
Figure 2 is a diagrammatic front elevational view of a conventional prior art selective laser sintering machine showing some of the mechanisms involved;
Figure 3 is a diagrammatic front elevational view of the system of the present invention showing the metering of the powder in front of the roller mechanism;
Figure 4 is a second diagrammatic front elevational view of the system of the present invention showing the parking of the powder wave near the part bed;
Figure 5 is a third diagrammatic front elevational view of the system of the present invention showing the retraction of the roller mechanism and the parking of the roller mechanism under the feed mechanism while the laser is selectively heating the part bed and the part bed heater is pre-heating the parked powder wave;
Figure 6 is a fourth diagrammatic front elevational view of the system of the present invention showing the dispensing of the second layer of powder onto the top of the roller mechanism;
Figure 7 is a fifth diagrammatic front elevational view of the system of the present invention showing the first layer of powder being distributed across the target area and the second layer of powder being carried on top of the roller mechanism to the other side of the target area;
Figure 8 is a sixth diagrammatic front elevational view of the system of the present invention showing the depositing of the second layer of powder adjacent to the roller on the opposing side of the powder bed and depositing of residual powder from the first layer in an overflow receptacle;
Figure 9 is the seventh diagrammatic front elevational view of the system of the present invention showing the parking of the second powder wave near the part bed;
Figure 10 is an eighth diagrammatic view of the system of the present invention showing the parking of the roller to the side while the laser is selectively heating the part bed and the part bed heater is pre-heating the parked powder wave;
Figure 11 is a ninth diagrammatic front elevational view of the system of the present invention showing the second layer of powder being distributed across the target area; and
Figure 12 is a tenth diagrammatic front elevational view of the system of the present invention showing the roller completing one cycle by depositing residual powder in a second overflow receptacle.

### DETAILED DESCRIPTION OF THE INVENTION

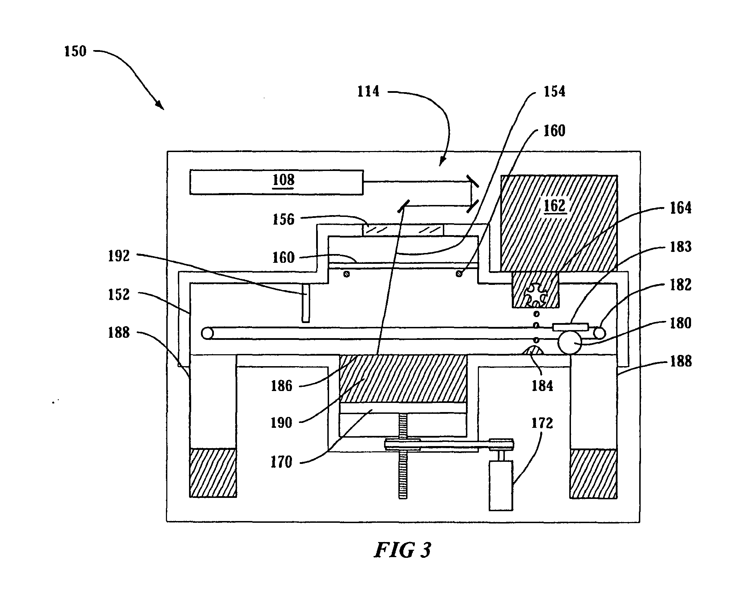

An apparatus for carrying out the present invention can be seen in Figure 3 and is shown generally as **150.** The process chamber is shown as **152.** The laser beam **154** enters through a laser window **156** that isolates the laser and optics (not shown) of the same type as described with respect to Figure 1 from the higher temperature environment of the process chamber **152.** Radiant heating elements **160** provide heat to the part bed and to the areas immediately next to the part bed. These radiant heating elements can be any number of types including, for example, quartz rods or flat panels. A preferred design is fast response quartz rod heaters.

A single powder feed hopper **162** is shown with a bottom feed mechanism **164** controlled by a motor (not shown) to control the amount of powder dropped onto the bed below. The feed mechanism can be of several types including, for example, a star feeder, an auger feeder, or a rotary drum feeder. A preferred feeder is a rotary drum. A part piston **170** is controlled by a motor **172** to move downwardly below the floor of the chamber **152** by a small amount, for example 0.125 mm, to define the thickness of each layer of powder to be processed.
Roller mechanism **180** includes a counter-rotating roller driven by motor **182** that spreads powder from powder wave **184** across the laser target area **186.** When traveling in either direction the roller mechanism **180** carries any residual powder not deposited on the target area into overflow receptacles **188** on opposing ends of the chamber. Target area **186,** for purposes of the description herein, refers to the top surface of heat-fusible powder, including any portions previously sintered, disposed above part piston **170.** The sintered and unsintered powder disposed on part piston **170** will be referred to as part bed **190.** Although the use of counter-rotating roller mechanism **180** is preferred, the powder can also be spread by other means such as a wiper or a doctor blade.

Operation of the selective laser sintering system of this invention is shown beginning in Figure 3. In a first powder dispensing step a quantity of powder is metered from above from the hopper **162** by the bottom feed mechanism **164** to a position in front of the roller mechanism **180.** The quantity of powder metered will depend upon the size of the target area **186** to be covered and the desired layer thickness to be formed. The deposited quantity of powder appears as a mound, but will be referred to hereinafter as a parked powder wave. Parked powder wave **184** shown in Figure 3 can contain from about 47.5 to about 131 cubic centimeters (2.9 to about 8.0 cubic inches) of powder when layer thicknesses of from about 0.0762mm (0.003 inches) to about 0.203mm (0.008 inches) are desired in each layer formed.

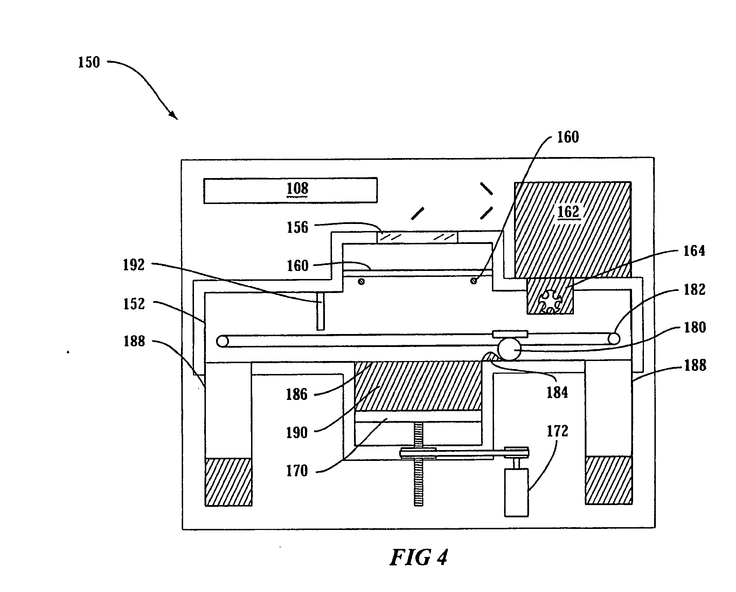

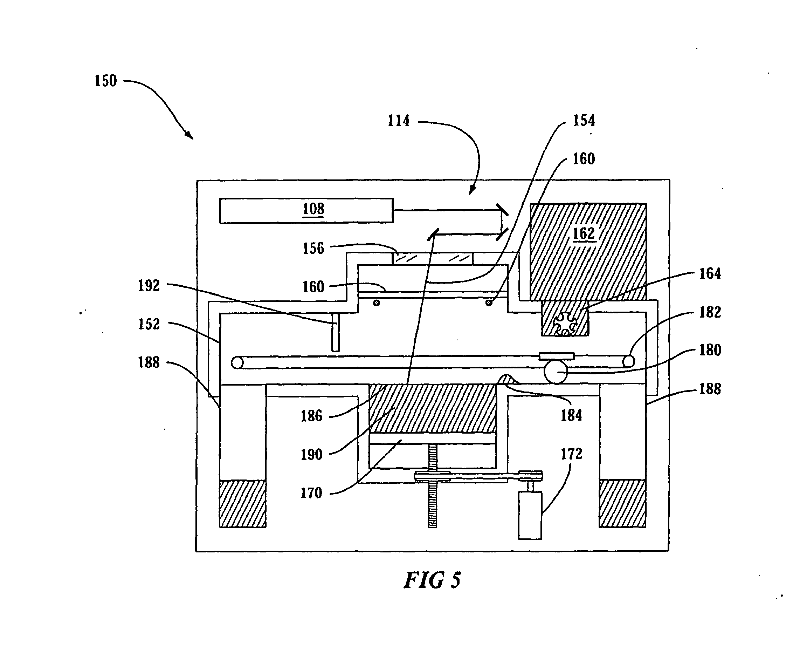

In a second step, shown in Figure 4, the counter-rotating roller mechanism **180** is activated to move the powder wave **184** slightly forward and park it at the edge of the target area **186** on a first side in view of the radiant heating elements **160.** In a third step, shown in Figure 5, the roller mechanism **180** is moved back and parked directly under the feed hopper **162.** In iterations other than for the first quantity of powder metered from the feed mechanism **164,** the laser (not shown) is then turned on and the laser beam **154** scans the current layer to selectively fuse the powder on that layer. While the laser is scanning the roller mechanism **180** remains parked with its powder support surface or powder carrying structure **183** directly under the powder feeder hopper **162.** Also while the laser is scanning, the parked powder wave **184** adjacent the first side of the target area **186** is pre-heated by the action of the radiant heating elements **160.** This step can eliminate the need for separate radiant heaters to pre-heat the powder.

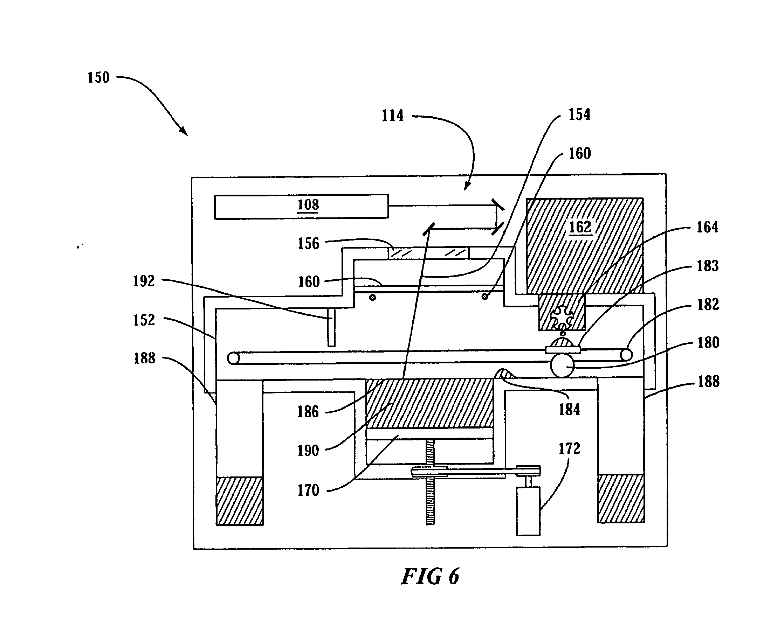

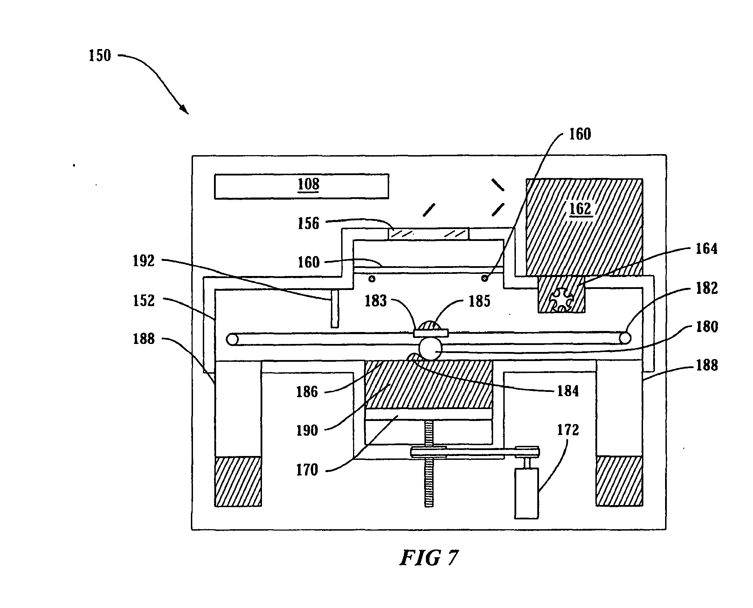

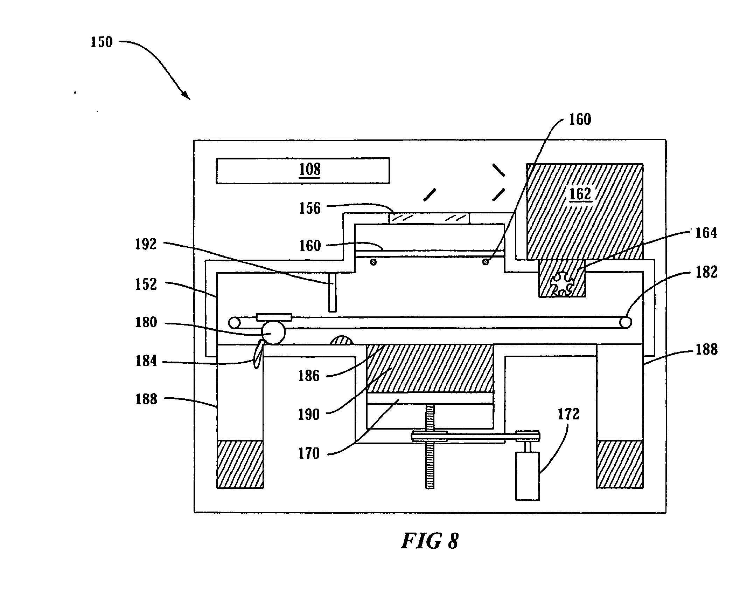

In a next step, shown in Figure 6, a second powder wave **185** is fed onto the powder support surface or powder carrying structure **183** on the top of the roller mechanism **180.** After scanning by the laser of the current layer the next step, shown in Figure 7, begins. The roller mechanism **180** is activated and traverses completely across the system, spreading the first layer of pre-heated powder from the first parked powder wave **184** across the target area **186,** while carrying the second powder wave **185** for creating the second layer of powder on powder support surface **183** of the roller mechanism **180.** In the next step, shown in Figure 8, a mounted stationary blade **192** dislodges the second powder wave **185** for creating the second layer of powder off of the powder support surface **183** of the top of roller mechanism **180** as the roller mechanism passes under the blade, depositing the second powder wave **185** on the floor of the process chamber **152** adjacent the second opposing side of the target area **186** while the roller mechanism **180** proceeds to feed any excess powder into the overflow receptacle **188.**

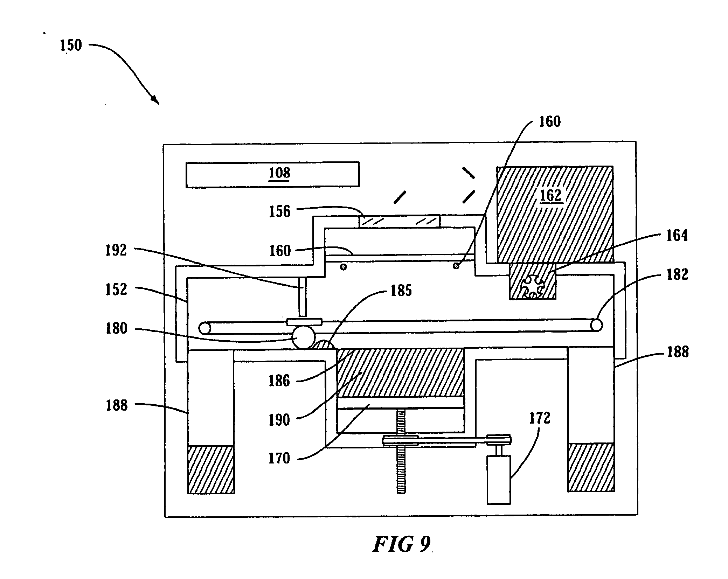

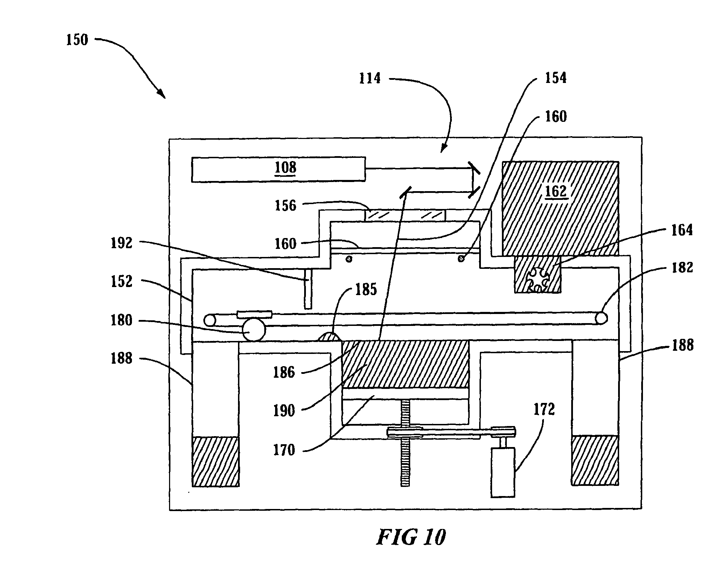

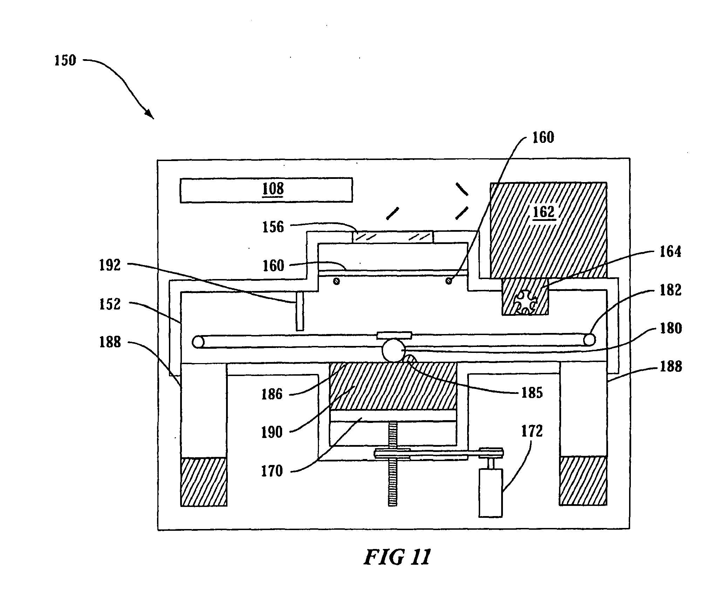

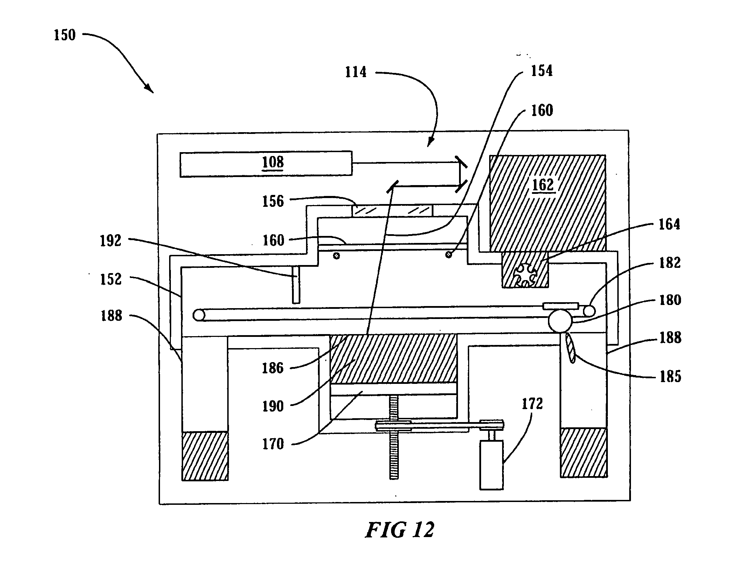

In the next step, shown in Figure 9, the roller mechanism **180** immediately reverses and moves to park the second powder wave **185** near the part bed **190** and in sight of the radiant heating elements **160** sufficiently close to receive heating effect from them. In the next step of this preferred embodiment shown in Figure 10 the roller mechanism **180** moves back and parks while the laser scanning action is completed and the quantity of powder in the second powder wave **185** is pre-heated by the radiant heating elements **160.** After the laser scanning action is complete the roller mechanism **180** is then activated and moves to spread the second quantity of powder in the second powder wave **185** over the surface of the target area **186** as shown in Figure 11. After leveling the powder the roller mechanism **180,** as seen in Fig. 12, proceeds to the end of its run and drops any excess powder into the overflow receptacle **188.** This completes the cycle and the next cycle is ready to proceed as shown in Figure 3.

This inventive design concept reduces a laser sintering machine in both footprint (the horizontal width of the build chamber) and in mechanical mechanisms. The present invention now employs only one feed hopper, one piston, and preferably only one set of radiant heater elements. The reduced size of the build chamber improves the temperature control and temperature response of the system.

While the invention has been described above with references to specific embodiments, it is apparent that many changes, modifications and variations in the materials, arrangement of parts and steps can be made without departing from the inventive concept disclosed herein. Accordingly, the scope of the appended claims is intended to embrace all such changes, modifications and variations that may occur to one of skill in the art upon a reading of the disclosure. For example any suitable device such as a skive, roller or brush can be used to dislodge or remove the quantity of powder in the second powder wave from the powder carrying surface or structure of the specific spreading mechanism employed, whether a roller, wiper blade or other suitable device.

## Claims

1. A method for forming a three dimensional article by laser sintering comprising the steps of:
(a) depositing, in a first depositing step, a first quantity of powder (184) on a first side of a target area (186);
(b) preheating the first quantity of powder
(c) spreading, in a first spreading step, the first quantity of powder (184) with a spreading mechanism (180) to form a first layer of powder;
(d) directing an energy beam (154) over the target area (186) causing the first layer of powder to form an integral layer;
(e) depositing, in a second depositing step, a second quantity of powder on an opposing second side of the target area (186);
(f) preheating the second quantity of powder;
(g) spreading, in a second spreading step, the second quantity of powder with the spreading mechanism (180) to form a second layer of powder;
(h) directing the energy beam (154) over the target area (186) causing the second layer of powder to form a second integral layer bonded to the first integral layer;
(i) repeating steps (a) to (h) to form additional layers that are integrally bonded to adjacent layers so as to form a three dimensional article, wherein the first depositing step comprises feeding the first quantity of powder in front of the spreading mechanism and feeding the second quantity of powder on the spreading mechanism
wherein the second quantity of powder is carried during the first spreading step from the first side to the second side of the target area and the second depositing step comprises dislodging the second quantity of powder from the moving spreading mechanism by use of a stationary blade (192).

2. The method of claim 1 further comprising using a roller as the spreading mechanism (180).

3. The method of claim 2 further comprising using a counter-rotating roller.

4. The method of claim 1 further comprising using a wiper blade as the spreading mechanism (180).

5. The method of claim 1 further comprising using a laser beam (154) in the directing step.

6. The method of claim 5 further comprising using a carbon dioxide laser (108) to provide the laser beam (154).

7. The method of claim 1 further comprising depositing the quantity of powder from an overhead feed mechanism (162, 164) onto a powder carrying structure (183) on the spreading mechanism (180).

8. The method of claim 7 further comprising dislodging the powder from the powder carrying structure (183) on a side adjacent the target area (186).

9. An apparatus for producing parts from a powder comprising in combination :
(a) a chamber (152) having a target area (186) at which an additive process is performed, the target area (186) having a first side and an opposing second side;
(b) means for fusing selected portions of a layer of powder at the target area (186);
(c) a powder feed hopper (162) located above and on the first side of the target area for feeding the powder into the chamber;
(d) means for spreading a first layer of powder over the target area (186);
(e) radiant heaters (160) for preheating the powder;
(f) means for depositing (180, 192) a second quantity of powder on the opposing second side of the target area; and
(g) means for spreading (180) the second quantity of powder over target area,
**characterized in that**
(h) the means for spreading (180) a first layer of powder comprises a carrying structure (183) for carrying the second quantity of powder to the opposing second side of the target area (186), wherein the second quantity of powder is to be used for forming the second layer of powder.

10. The apparatus of claim 9 wherein the means for spreading (180) comprises:
(a) a roller (180);
(b) a motor (182) coupled to the roller (180) for moving the roller across the target area (186) to level the first layer of powder; and
(c) wherein the carrying structure (183) of the roller (180) is located above the roller..

11. The apparatus of claim 10 wherein the means (180, 192) for depositing the second quantity of powder on the second side of the target area comprises a device (192) for dislodging the second quantity of said powder off of the carrying structure (183).

12. The apparatus of claim 10 wherein the means for fusing selected portions of a layer of the powder at the target area (186) comprises:
(a) a energy beam (154);
(b) an optics mirror system (114) to direct the energy beam; and
(c) energy beam control means coupled to the optics mirror system including computer means, the computer means being programmed with information indicative of the desired boundaries of a plurality of cross-sections of the part to be produced.

13. The apparatus of claim 12 wherein the energy beam (154) is a laser energy beam.

14. The apparatus of claim 11 wherein the device for dislodging (192) further comprises a stationary blade.

15. The apparatus according to claim 9 further comprising:
(a) a wiper blade;
(b) a motor coupled to the wiper blade for moving the wiper blade across the target area to spread the first layer of powder; and
(c) a carrying structure (183) above the wiper blade to receive and carry the second quantity of powder for depositing on the opposing second side of the target area.

## Patentansprüche

1. Ein Verfahren zum Ausbilden eines dreidimensionalen Artikels durch Lesersintern, umfassend die Schritte:
(a) Ablagern einer ersten Menge von Pulver (184) auf einer ersten Seite eines Zielbereiches (186) in einem ersten Ablagerungsschritt;
(b) Vorwärmen der ersten Menge des Pulvers;
(c) Verteilen der ersten Menge des Pulvers (184) mit einem Verteilmechanismus (180) in einem ersten Verteilschritt, um eine erste Schicht des Pulvers auszubilden,
(d) Führen eines Energiestrahls (164) über den Zielbereich (186), wobei dies verursacht, dass die erste Schicht des Pulvers eine integrale Schicht ausbildet;
(e) Ablagern einer zweiten Menge des Pulvers auf einer gegenüberliegenden zweiten Seite des Zielbereiches (186) in einem zweiten Ablagerungsschritt;
(f) Vorwärmen der zweiten Menge des Pulvers;
(g) Verteilen der zweiten Menge des Pulvers mit dem Verteilmechanismus (180) in einem zweiten Verteilschritt, um eine zweite Schicht des Pulvers auszubilden;
(h) Führen des Energiestrahls (154) über den Zielbereich (186), sodass die zweite Schicht des Pulvers eine zweite integrale Schicht, die mit der ersten integralen Schicht verbunden ist, ausbildet;
(i) Wiederholen der Schritte (a) bis (h), um zusätzliche Schichten auszubilden, die integral mit benachbarten Schichten verbunden sind, um dadurch einen dreidimensionalen Artikel zu bilden, wobei der erste Ablagerungsschritt eine Beschickung der ersten Menge des Pulvers vor dem Verteilmechanismus und eine Beschickung der zweiten Menge des Pulvers auf dem Verteilmechanismus umfasst, wobei die zweite Menge des Pulvers während des ersten Verteilschritts von der ersten Seite zu der zweiten Seite des Zielbereichs getragen wird und der zweite Ablagerungsschritt eine Entfernung der zweiten Menge des Pulvers von dem sich bewegenden Verteilmechanismus durch die Verwendung eines stationären Blattes (192) umfasst.

2. Das Verfahren nach Anspruch 1, weiterhin umfassend die Verwendung einer Rolle als Verteilmechanismus (180).

3. Das Verfahren nach Anspruch 2, weiterhin umfassend die Verwendung einer gegenläufigen Rolle.

4. Das Verfahren nach Anspruch 1 , weiterhin umfassend ein Wischblatt als Verteilmechanismus (180).

5. Das Verfahren nach Anspruch 1, weiterhin umfassend die Verwendung eines Laserstrahls (154) bei dem Führungsschritt.

6. Das Verfahren nach Anspruch 5, weiterhin umfassend die Verwendung eines Kohlendioxidlasers (108) zu Bereitstellung des Laserstrahls (154).

7. Das Verfahren nach Anspruch 1, weiterhin umfassend die Ablagerung der Menge von Pulver von einem oben liegenden Zuführmechanismus (162, 164) auf eine Pulvertragestruktur (183) auf dem Verteilmechanismus (180).

8. Verfahren nach Anspruch 7, weiterhin umfassend die Entfernung des Pulvers von der Pulvertragestruktur (183) an eine benachbarte Seite zum Zielbereich (186).

9. Eine Vorrichtung zur Herstellung von Teilen aus einem Pulver in Kombination umfassend:
(a) eine Kammer (152), die einen Zielbereich (186) aufweist, auf dem ein Aufbauprozess (additive process) ausgeführt wird, wobei der Zielbereich (186) eine erste Seite und eine gegenüberliegende zweite Seite aufweist;
(b) Mittel zur Verschmelzung von ausgewählten Teilen von einer Schicht von Pulver auf dem Zielbereich (186);
(c) ein Pulvereinfülltrichter (162), der oberhalb und an der ersten Seite des Zielbereiches angeordnet ist, zur Beschickung des Pulvers in die Kammer;
(d) Mittel zum Verteilen einer ersten Schicht von Pulver über den Zielbereich (186);
(e) Heizstrahler (160) zum Vorwärmen des Pulvers;
(f) Mittel zum Ablagern (180, 192) einer zweiten Menge von Pulver auf der gegenüberliegenden zweiten Seite des Zielbereichs; und
(g) Mittel zum Verteilen (180) der zweiten Menge des Pulvers über dem Zielbereich,
**dadurch gekennzeichnet, dass**
(h) die Mittel zum Verteilen (180) einer ersten Schicht des Pulvers eine Tragestruktur (183) zum Tragen der zweiten Menge des Pulvers zu der gegenüberliegenden zweiten Seite des Zielbereiches (186) umfasst, wobei die zweite Menge des Pulvers zur Ausbildung der zweiten Schicht des Pulvers verwendet wird.

10. Die Vorrichtung nach Anspruch 9, wobei die Mittel zum Verteilen (180) umfassen:
(a) eine Rolle (180);
(b) einen Motor (182), der verbunden ist mit der Rolle (180) zum Bewegen der Rolle über dem Zielbereich (186), um die erste Schicht des Pulvers auszugleichen; und
(c) wobei die Tragestruktur (183) der Rolle (180) über der Rolle angeordnet ist.

11. Die Vorrichtung nach Anspruch 10, wobei die Mittel (180, 192) zum Ablagern der zweiten Menge des Pulvers auf der zweiten Seite des Zielbereichs eine Vorrichtung (192) zur Entfernung der zweiten Menge des Pulvers von der Tragestruktur (183) umfasst.

12. Die Vorrichtung nach Anspruch 10, wobei die Mittel zum Verschmelzen ausgewählter Bereiche einer Schicht von Pulver auf dem Zielbereich (186) umfasst:
(a) einen Energiestrahl (154);
(b) ein optisches Spiegelsystem (114) zur Führung des Energiestrahls; und
(c) ein Steuermittel für den Energiestrahl, die mit dem optischen Spiegelsystem gekoppelt sind, umfassend Computermittel, wobei die Computermittel mit Informationen, die die gewünschten Grenzen von einer Mehrzahl von Querschnitten des zu produzierenden Teils abbilden, programmiert sind

13. Die Vorrichtung nach Anspruch 12, wobei der Energiestrahl (154) ein Laserenergiestrahl ist.

14. Die Vorrichtung nach Anspruch 11, wobei die Einrichtung zur Entfernung (192) weiterhin ein stationäres Blatt umfasst.

15. Die Vorrichtung gemäß Anspruch 9, weiterhin umfassend:
(a) ein Wischblatt;
(b) einen Motor, der mit dem Wischblatt zur Bewegung des Wischblatts über dem Zielbereich verbunden ist, um die erste Schicht des Pulvers zu verteilen; und
(c) eine Tragestruktur (183) oberhalb des Wischblatts, um die zweite Menge des Pulvers zu erhalten und zu tragen und an der gegenüberliegenden zweiten Seiten des Zielbereichs abzulagern.

## Revendications

1. Un procédé pour former un article tridimensionnel par frittage laser, comprenant les étapes suivantes :
a) déposer, à une première étape de dépôt, une première quantité de poudre (184) sur un premier côté d'une zone cible (186) ;
b) préchauffer la première quantité de poudre ;
c) étaler, à une première étape d'étalement, la première quantité de poudre (184) avec un mécanisme d'étalement pour former une première couche de poudre ;
d) diriger un faisceau d'énergie (154) sur la zone cible (186) pour faire en sorte que la première couche de poudre forme une couche monobloc ;
e) déposer, à une seconde étape de dépôt, une seconde quantité de poudre sur un second côté opposé de la zone cible (186) ;
f) préchauffer la seconde quantité de poudre ;
g) étaler, à une seconde étape d'étalement, la seconde quantité de poudre avec le mécanisme d'étalement (180) pour former une seconde couche de poudre ;
h) diriger le faisceau d'énergie (154) sur la zone cible (186) pour faire en sorte que la seconde couche de poudre forme une seconde couche monobloc liée à la première couche monobloc ;
i) répéter les étapes a) à h) pour former des couches additionnelles qui sont liées de façon monobloc à des couches adjacentes de manière à former un article tridimensionnel, où la première étape de dépôt comprend l'alimentation avec la première quantité de poudre devant le mécanisme d'étalement et l'alimentation avec la seconde quantité de poudre sur le mécanisme d'étalement, la seconde quantité de poudre étant transportée lors de la première étape d'étalement du premier côté vers le second côté de la zone cible et la seconde étape de dépôt comprenant le délogement de la seconde quantité de poudre hors du mécanisme d'étalement mobile par utilisation d'une lame fixe (192).

2. Le procédé de la revendication 1, comprenant en outre l'utilisation d'un rouleau comme mécanisme d'étalement (180).

3. Le procédé de la revendication 1, comprenant en outre l'utilisation d'un rouleau contrarotatif.

4. Le procédé de la revendication 1, comprenant en outre l'utilisation d'une lame d'essuyage comme mécanisme d'étalement (180).

5. Le procédé de la revendication 1, comprenant en outre l'utilisation d'un faisceau d'énergie (154) lors de l'étape consistant à diriger.

6. Le procédé de la revendication 5, comprenant en outre l'utilisation d'un laser à dioxyde de carbone (108) pour produire le faisceau d'énergie (154).

7. Le procédé de la revendication 1, comprenant en outre le dépôt de la quantité de poudre depuis un mécanisme d'alimentation suspendu (162, 164) au-dessus d'une structure support de poudre (183) sur le mécanisme d'étalement (180).

8. Le procédé de la revendication 7, comprenant en outre le délogement de la poudre hors de la structure support de poudre (183) sur un côté adjacent à la zone cible (186).

9. Un dispositif pour produire des pièces à partir d'une poudre comprenant en combinaison :
a) une chambre (152) ayant une zone cible (186) à l'endroit de laquelle est exécuté un processus additif, la zone cible (186) ayant un premier côté et un second côté opposé ;
b) des moyens pour fondre des parties sélectionnées d'une couche de poudre à l'endroit de la zone cible (186) ;
c) une trémie d'alimentation de poudre (162) située au-dessus et sur le premier côté de la zone cible pour alimenter la poudre dans la chambre ;
d) des moyens pour étaler une première couche de poudre au-dessus de la zone cible (186) ;
e) un chauffage radiant (160) pour préchauffer la poudre ;
f) des moyens pour déposer (180, 192) une seconde quantité de poudre sur le second côté opposé de la zone cible ; et
g) des moyens pour étaler (180) la seconde quantité de poudre au-dessus de la zone cible,
**caractérisé en ce que**
h) les moyens pour étaler (180) une première couche de poudre comprennent une structure support (183) pour transporter la seconde quantité de poudre vers le second côté opposé de la zone cible (186), la seconde quantité de poudre devant être utilisée pour former la seconde quantité de poudre.

10. Le dispositif de la revendication 9, dans lequel les moyens pour étaler (180) comprennent :
a) un rouleau (180) ;
b) un moteur (182) couplé au rouleau (180) pour déplacer le rouleau sur l'étendue de la zone cible (486) afin de mettre à niveau la première couche de poudre ; et
c) la structure support (183) du rouleau (180) étant située au-dessus du rouleau.

11. Le dispositif de la revendication 10, dans lequel les moyens (180, 192) pour déposer la seconde quantité de poudre sur le second côté de la zone cible comprennent un appareil (192) pour déloger la seconde quantité de ladite poudre à l'écart de la structure support (183).

12. Le dispositif de la revendication 10, dans lequel les moyens pour faire fondre les parties sélectionnées d'une couche de la poudre à l'endroit de la zone cible (186) comprennent :
a) un faisceau d'énergie (154) ;
b) un système de miroir optique (114) pour diriger le faisceau d'énergie ; et
c) des moyens de contrôle du faisceau d'énergie couplés au système de miroir optique comprenant des moyens calculateurs, les moyens calculateurs étant programmés avec des informations représentatives des frontières souhaitées d'une pluralité de sections droites de la pièce à produire.

13. Le dispositif de la revendication 12, dans lequel le faisceau d'énergie (154) est un faisceau d'énergie laser.

14. Le dispositif de la revendication 11, dans lequel l'appareil pour déloger (192) comprend en outre une lame fixe.

15. Le dispositif de la revendication 9, comprenant en outre :
a) une lame d'essuyage ;
b) un moteur couplé à la lame d'essuyage pour déplacer la lame d'essuyage sur l'étendue de la zone cible afin d'étaler la première couche de poudre ; et
c) une structure support (183) au-dessus de la lame d'essuyage pour recevoir et transporter la seconde quantité de poudre pour dépôt sur le second côté opposé de la zone cible.
